# FASCICULE DE BREVET EUROPEEN

(11) **EP 3 884 206 B1**
(45) Date de publication et mention de la délivrance du brevet: **18.01.2023**
(21) Numéro de dépôt: 19813122.9
(22) Date de dépôt: 28.10.2019
(51) Int. Cl.: F21S 43/19, F21S 43/243, B60Q 1/26, F21V 8/00, F21S 43/37, F21S 43/30, F21S 43/14, F21S 43/15, F21S 43/239, F21S 43/249

(54) **MODULE LUMINEUX MULTIFONCTIONS DOTÉ DE DEUX GUIDES DE LUMIÈRE DE TYPE PLAT**
MULTIFUNKTIONALES LICHTMODUL MIT ZWEI FLACHEN LICHTLEITERN
MULTI-FUNCTIONAL LIGHT MODULE PROVIDED WITH TWO FLAT LIGHT GUIDES

(30) Priorité: 23.11.2018 FR 1871790
(43) Date de publication de la demande: 29.09.2021
(73) Titulaire: PSA Automobiles SA, 78300 Poissy (FR)
(72) Inventeur: PERON, Rodolphe, 95220 HERBLAY (FR); ROYER, Guillaume, 91680 BRUYERES LE CHATEL (FR)
(86) Numéro de dépôt international: PCT/FR2019/052560
(87) Numéro de publication internationale: WO 2020/104739

(56) Documents cités:
- EP-A1- 3 372 892
- EP-A2- 2 407 709
- EP-A2- 2 450 622
- WO-A1-2012/059852

## Description

### Domaine technique

La présente invention concerne d'une manière générale le domaine des blocs optiques d'éclairage et de signalisation pour véhicules automobiles. Elle vise en particulier un module lumineux d'un tel bloc optique apte à assurer plusieurs fonctions d'éclairage et/ou de signalisation différentes.

### Technique antérieure

De tels modules lumineux assurent ainsi au moins deux fonctions photométriques parmi les fonctions feu de stop, feu indicateur de changement de direction, feu de position (cette fonction étant dénommée également veilleuse ou lanterne), ou bien encore feu diurne couramment désignée sous l'acronyme anglais DRL (pour « Daytime Running Light »).

Ces modules lumineux comportent généralement des premiers moyens d'émission de rayons lumineux permettant d'assurer une première fonction photométrique, et des deuxièmes moyens d'émission de rayons lumineux permettant d'assurer une deuxième fonction photométrique

De manière courante, ces premier et deuxième moyens d'émission lumineux sont constitués respectivement par une première et une seconde séries de diodes électroluminescentes, couramment désignées sous l'acronyme anglais LED (pour « Light Emitting Diodes ») et implantées sur au moins une carte à circuits imprimés de type PCB (pour « Printed Circuit Board »).

De telles diodes ont toutefois pour inconvénient de présenter un grand angle d'éclairage, ce qui engendre une large diffusion et beaucoup de pertes dans une application visant à éclairer une zone éloignée.

Aussi, il est courant d'associer chaque série de diodes à un guide de lumière correspondant de type plat (communément désigné sous le terme anglo-saxon « flat guide »), comportant un corps transparent sensiblement plat et apte à transférer les rayons lumineux qui alimentent sa zone d'entrée vers une zone avant de sortie.

Afin que les rayons lumineux émis par les diodes pénètrent correctement dans les guides de lumière, il est indispensable que le ou les cartes à circuit imprimés soient positionnées très précisément et de façon stable par rapport à ces guides de lumière.

Un tel positionnement s'avère complexe à obtenir dans un espace exigu du fait que chaque guide de lumière et la carte à circuits imprimés lui étant associée sont installés séparément et présentent des tolérances dimensionnelles respectives, inhérentes à leurs modes de fabrication.

Cette complexité est encore augmentée lorsque, pour des raisons d'encombrement, de masse et/ou de coût, les première et deuxièmes séries de diodes sont implantées sur deux faces opposées d'une même carte à circuits imprimés.

On connaît de la demande de brevet EP 3 372 892 A1, un tel module lumineux comportant :
- des premiers et deuxièmes moyens d'émission de rayons lumineux agencés sur les deux faces opposées d'une même carte à circuit imprimés ;
- des premier et deuxième guides de lumière de type plat aptes respectivement à recevoir les rayons lumineux provenant desdits premiers et deuxièmes moyens d'émission ; et
- une pièce de support comportant deux fûts traversant successivement un premier couple d'orifices correspondants ménagés dans ledit premier guide de lumière et un deuxième couple d'orifices correspondants ménagés dans ladite carte à circuit imprimés.

Ledit deuxième guide de lumière est emboîté sur les extrémités libres des dits fûts, chaque dit fût présentant un perçage interne débouchant au niveau de son extrémité libre et dans lequel est vissée une vis ayant préalablement traversé un trou correspondant ménagé dans ledit deuxième guide de lumière et dont la tête est plaquée contre la face opposée à ladite carte à circuits imprimés de ce deuxième guide de lumière sur le pourtour de ce trou.

La présence de cette pièce de support permet de positionner précisément par rapport à elle les deux guides de lumière et la carte à circuits imprimés, de sorte à minimiser toutes les dispersions de positionnement de ces guides de lumière par rapport aux moyens lumineux leurs étant associées et agencés sur les deux faces opposées de cette carte à circuits imprimés.

Toutefois, les guides de lumière et la carte à circuits imprimés ont tendance à s'arc-bouter lors de leur mise en place sur la pièce de support, ce qui complexifie les opérations de montage du module lumineux.

### Exposé de l'invention

La présente invention vise donc à améliorer la situation.

Elle propose à cet effet un module lumineux pour bloc optique d'éclairage et/ou de signalisation de véhicule automobile, comportant des premiers et deuxièmes moyens d'émission de rayons lumineux agencés sur les deux faces opposées d'une même carte à circuit imprimés, des premier et deuxième guides de lumière de type plat aptes respectivement à recevoir les rayons lumineux provenant desdits premiers et deuxièmes moyens d'émission et propres à assurer respectivement avec lesdits moyens d'émission correspondants une première et une deuxième fonctions photométrique prédéterminées, ainsi qu'une pièce de support comportant deux fûts traversant successivement deux premiers orifices correspondants ménagés dans ledit premier guide de lumière et deux deuxièmes orifices correspondants ménagés dans ladite carte à circuits imprimés, ledit deuxième guide de lumière étant emboîté sur les extrémités libres desdits fûts, chaque dit fût présentant en outre un perçage interne débouchant au niveau de son extrémité libre et dans lequel est vissée une vis ayant préalablement traversé un trou correspondant ménagé dans ledit deuxième guide de lumière et dont la tête est plaquée contre la face opposée à ladite carte à circuits imprimés de ce deuxième guide de lumière sur le pourtour de ce trou ; caractérisé en ce que lesdits fûts présentent une forme conique, leur section diminuant depuis leur base rattachée à ladite pièce de support jusqu'à leur extrémité libre.

Le fait de prévoir des fûts de forme conique permet ainsi de faciliter le montage du module lumineux en évitant tout risque d'arc-boutement des guides de lumière et de la carte à circuits imprimés lors de leur mise en place sur la pièce de support.

Selon des caractéristiques préférées dudit module lumineux selon l'invention, prises seules ou en combinaison :
- chaque dit fût est pourvu d'au moins une première ailette périphérique saillant radialement depuis sa base et sur une première hauteur prédéterminée, le sommet de chaque au moins dite première ailette constituant une surface de butée contre laquelle repose en appui ledit premier guide de lumière de sorte à le positionner précisément à un premier niveau prédéfini ;
- la face orientée vers ladite carte à circuits imprimés dudit premier guide de lumière comprend une pluralité de bossages constituant des points d'appui ponctuels contre lesquels repose en appui cette carte à circuits imprimés de sorte à la positionner précisément à un deuxième niveau transversal prédéfini ;
- chaque dit fut est pourvu d'au moins une deuxième ailette périphérique, lesdites deuxièmes ailettes traversant successivement des premières fentes correspondantes ménagées en périphérie desdits premiers orifices dans ledit premier guide de lumière et des deuxièmes fentes correspondantes ménagées en périphérie desdits deuxièmes orifices dans ladite carte à circuits imprimés ;
- chaque dite deuxième ailette présente une nervure sur au moins l'une de ses faces, lesdites nervures constituant des organes de mise au point du positionnement dudit premier guide de lumière et de ladite carte à circuits imprimés ;
- ladite pièce de support comporte des moyens de maintien d'une partie de ladite carte à circuits imprimées, lesdits moyens de maintien comprenant au moins un muret dont le sommet constitue une surface de butée contre laquelle repose en appui l'une des faces de ladite carte à circuits imprimés, de sorte à empêcher toute flexion dans un sens de cette dernière ;
- lesdits moyens de maintien comprennent également au moins une patte élastiquement déformable pourvue d'une dent d'encliquetage clipsée dans une lumière correspondante ménagée dans ladite carte à circuits imprimés, de sorte à empêcher toute flexion dans l'autre sens de cette dernière ;
- ledit module lumineux comporte des troisièmes moyens d'émission de rayons lumineux agencés sur l'une des faces de ladite carte à circuit imprimés ainsi qu'un réflecteur ménagé sur ladite pièce de support et apte à recevoir les rayons lumineux provenant desdits troisièmes moyens d'émission, ledit réflecteur et lesdits troisièmes moyens d'émission étant propres à assurer une troisième fonction photométrique prédéterminée ; et/ou
- les différents moyens d'émission de rayons lumineux sont constitués respectivement par différentes séries de diodes lumineuses électroluminescentes ou laser.

L'invention concerne également sous un second aspect, un bloc optique d'éclairage et/ou de signalisation de véhicule, caractérisé en ce qu'il comporte au moins un tel module lumineux.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] est une vue en perspective d'un bloc optique comportant un module lumineux selon l'invention ;
[Fig 2] représente une vue en perspective du module lumineux du bloc optique de la figure 1 en configuration montée ;
[Fig 3] est une vue en perspective de la pièce de support du module lumineux de la figure 2 ;
[Fig 4] représente une vue partielle en perspective du sous ensemble constitué par la pièce de support et le premier guide de lumière après la mise en place de ce dernier ;
[Fig 5] est une vue partielle en coupe, prise selon un plan transversal vertical, du sous-ensemble de la figure 4 ;
[Fig 6] représente une vue en perspective du sous-ensemble constitué par la pièce de support, le premier guide de lumière et la carte à circuits imprimées après la mise en place de cette dernière ;
[Fig 7] est une vue en coupe, prise selon un plan longitudinal transversal, du module lumineux de la figure 2 ; et
[Fig 8] représente une vue en perspective prise de dessous de l'une des pattes de fixation du deuxième guide de lumière.

### Description détaillée

On définit sur les figures un repère orthogonal XYZ comprenant trois axes perpendiculaires deux à deux, à savoir :
- un axe X, définissant une direction longitudinale, parallèle à l'axe longitudinal du véhicule,
- un axe Y, définissant une direction transversale, horizontale, qui avec l'axe X définit un plan XY horizontal, et
- un axe Z, définissant une direction verticale, perpendiculaire au plan XY horizontal.

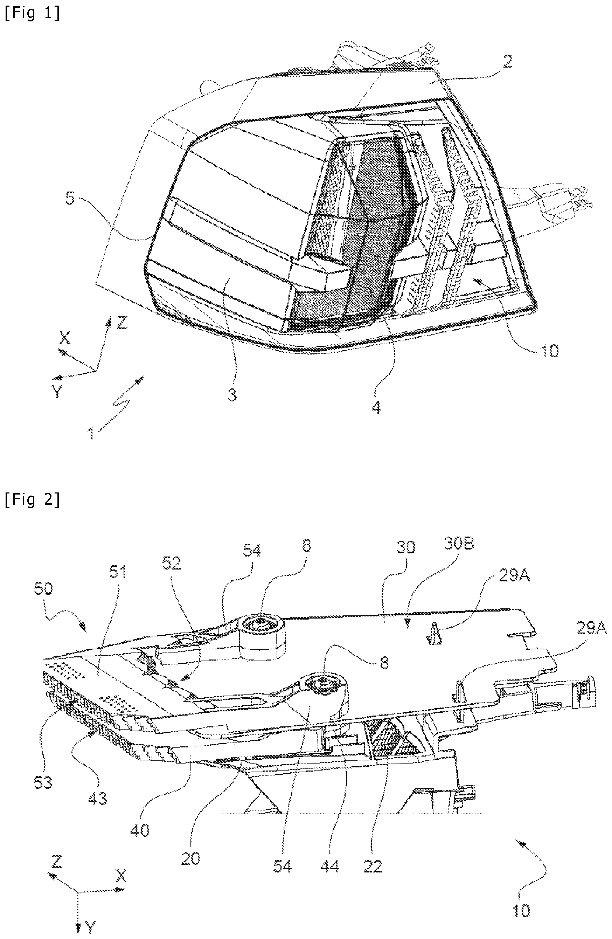

La figure 1 représente une vue en perspective d'un bloc optique arrière de signalisation 1 destiné à être monté sur la structure de caisse d'un véhicule automobile.

Dans la description qui va suivre et par convention, les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

Ce bloc optique de signalisation 1 comporte un boîtier 2, un module lumineux 10 selon l'invention monté sur ce boîtier 2, un masque 3 monté également sur ce boîtier 2 et recouvrant partiellement le module lumineux 10, un écran 4 monté sur le masque 3 et le module lumineux 10 dans la zone externe de ce bloc, ainsi qu'une glace extérieure 5 fixée sur le bord périphérique du boîtier 2 et recouvrant le module lumineux 10, le masque 3 et l'écran 4.

Destiné à être solidarisé à la partie arrière de la structure de caisse du véhicule, le boîtier 2 est venu avantageusement de moulage d'une seule pièce à partir d'un polymère thermoplastique tel que l'acrylonitrile butadiène styrène (ABS).

Représenté seul sur la figure 2, le module lumineux 10 selon l'invention est apte à assurer les fonctions photométriques feu stop, feu indicateur de changement de direction et feu de position (cette fonction étant dénommée également veilleuse ou lanterne).

Ce module lumineux 10 comporte une pièce de support 20, une carte à circuits imprimés 30 portant des premiers, deuxièmes et troisièmes moyens d'émission de rayons lumineux, ainsi que deux guides de lumière 40, 50 de type plat s'étendant parallèlement l'un à l'autre selon des plans moyens longitudinaux verticaux.

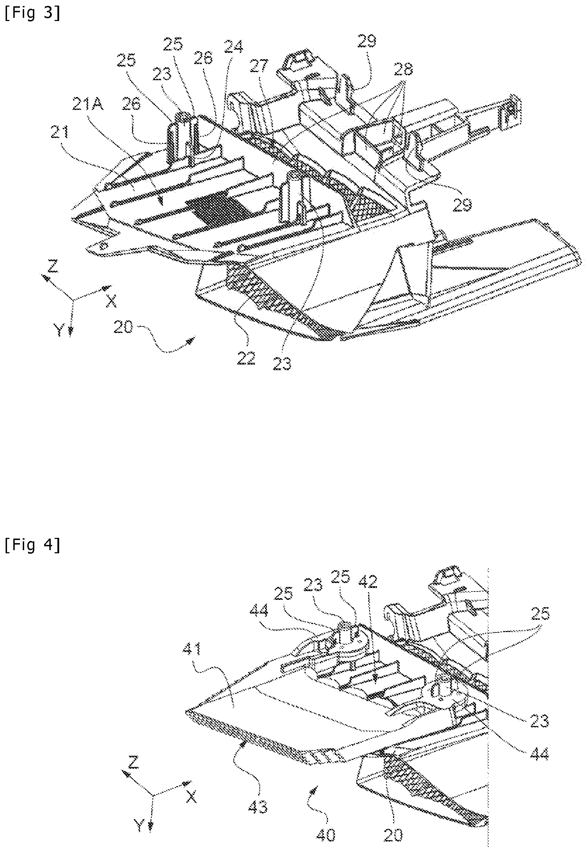

Comme illustré sur la figure 4, Le premier guide de lumière 40 comporte un corps transparent sensiblement plat 41 comprenant une zone d'entrée 42 prévue pour recevoir les rayons lumineux émis par les premiers moyens lumineux et apte à les guider vers une face de sortie 43 constituée en l'espèce par la tranche arrière de ce corps 41.

Le guide de lumière 40 comporte également deux pattes de fixation 44 s'étendant à l'avant du corps 41 et permettant d'assurer sa fixation sur la pièce de support 20 comme cela sera décrit en détails par la suite.

Comme illustré sur la figure 2, le deuxième guide de lumière 50 comporte un corps transparent sensiblement plat 51 comprenant une zone d'entrée 52 prévue pour recevoir les rayons lumineux émis par les deuxièmes moyens lumineux et apte à les guider vers une face de sortie 53 constituée en l'espèce par la tranche arrière de ce corps 51.

Tout comme le premier guide 40, ce deuxième guide de lumière 50 comporte également deux pattes de fixation 54 s'étendant à l'avant du corps 51 et permettant d'assurer sa fixation sur la pièce de support 20 comme cela sera décrit en détails par la suite.

De manière avantageuse, les deux guides de lumière 40 et 50 sont chacun réalisés d'une seule pièce par moulage à partir d'un matériau thermoplastique transparent ou translucide tel que le polycarbonate (PC) ou le polyméthacrylate de méthyle (PMMA).

La carte à circuit imprimés 30 est formée par une plaque rigide de type PCB (pour « Printed Circuit Board » en langue anglaise) s'étendant selon un plan moyen longitudinal vertical entre les deux guides de lumières 40, 50.

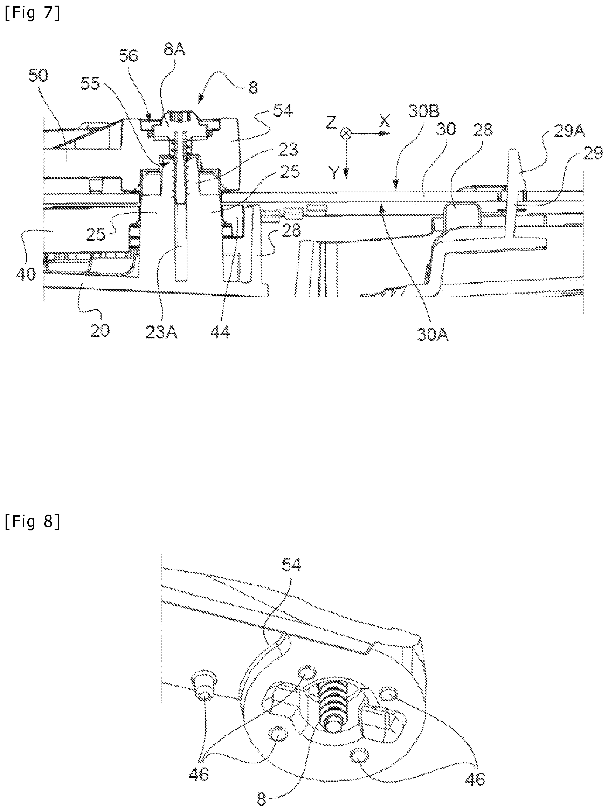

Elle porte sur sa première face 30A (voir figure 7) des premiers moyens d'émission de rayons lumineux non visibles sur les figures et propres à assurer, avec le premier guide de lumière 40, la fonction feu de stop.

Ces premiers moyens d'émission sont constitués par une première série de six diodes lumineuses électroluminescentes (LEDS ou OLEDS) ou laser présentant des axes d'émission sensiblement perpendiculaires à la carte à circuits imprimés 30 et agencées de sorte à émettre des rayons lumineux à destination de la zone d'entrée 42 du premier guide de lumière 40 en vue de leur transfert vers l'extérieur du module lumineux 10.

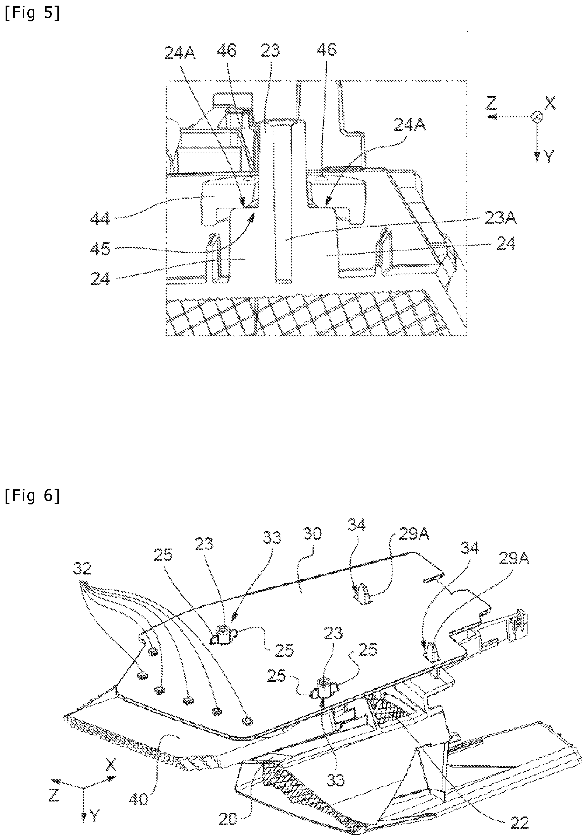

La carte à circuit imprimés 30 porte également sur sa seconde face 30B, opposée à la face 30A, des deuxièmes moyens d'émission de rayons lumineux 32 visibles sur la figure 6 et propres à assurer, avec le deuxième guide de lumière 50, la fonction feu indicateur de changement de direction.

Ces deuxièmes moyens d'émission 32 sont constitués par une deuxième série de six diodes lumineuses électroluminescentes (LEDS ou OLEDS) ou laser présentant des axes d'émission sensiblement perpendiculaires à la carte à circuits imprimés 30 et agencées de sorte à émettre des rayons lumineux à destination de la zone d'entrée 52 du deuxième guide de lumière 50 en vue de leur transfert vers l'extérieur du module lumineux 10.

La pièce de support 20, représentée seule sur la figure 3 et venue avantageusement de moulage à partir d'un matériau thermoplastique opaque tel que le polycarbonate (PC), comporte une paroi principale 21 s'étendant selon un plan moyen longitudinal vertical et formant la cloison de séparation entre la zone externe du bloc optique 1 dévolue à la fonction feu de position et la zone interne de ce bloc regroupant les fonctions feu de stop et feu indicateur de changement de direction.

Cette pièce de support 20 comprend également un réflecteur constitué par une paroi 22 de forme parabolique ou elliptique, saillant du côté externe de la paroi 21 dans la zone externe du bloc optique 1, et dont la face tournée vers l'écran 4 est recouverte d'un revêtement réfléchissant.

La paroi principale 21 porte sur sa première face 21A, orientée vers le premier guide de lumière 40, deux fût 23 s'étendant perpendiculairement à cette paroi selon une direction transversale et présentant une forme conique, leur section (ici circulaire) diminuant de façon continue et régulière depuis leur base rattachée à la paroi 21 jusqu'à leur extrémité libre.

Ces deux fûts 23 traversent successivement deux premiers orifices correspondants 45 ménagés dans les deux pattes de fixation 44 du premier guide de lumière 40 (voir figures 4 et 5), et deux deuxièmes orifices correspondants 33 ménagés dans la carte à circuit imprimés 30 (voir figure 6).

Tel qu'illustré sur les figures 3 et 5, chaque fût 23 est pourvu de deux premières ailettes périphériques diamétralement opposées 24, saillant radialement depuis sa base et sur une première hauteur prédéterminée.

Les sommets 24A de ces deux ailettes 24 constituent ainsi deux surfaces de butée contre laquelle repose en appui une patte de fixation correspondante 44 du premier guide de lumière 40 de sorte à positionner précisément ce dernier à un premier niveau transversal prédéfini (figure 5).

Toujours en référence aux figures 4 et 5, on peut remarquer que la face orientée vers la carte à circuits imprimées 30 de chaque patte de fixation 44 du premier guide de lumière 40 comprend une pluralité de bossages 46 (en l'espèce quatre) constituant des points d'appui ponctuels contre lesquels repose en appui cette carte à circuits imprimées 30 de sorte à la positionner précisément à un deuxième niveau transversal prédéfini.

Tel qu'illustré sur les figures 3, 4, 6 et 7, chaque fût 23 est pourvu également de deux secondes ailettes périphériques diamétralement opposées 25, saillant radialement depuis sa base, à angle droit des premières ailettes 24, et sur une seconde hauteur prédéterminée plus importante que celle de ces mêmes premières ailettes 24.

Ces secondes ailettes 25 traversent successivement deux premières fentes correspondantes ménagées en périphérie des premiers orifices 45 dans les deux pattes de fixation 44 du premier guide de lumière 40, et des deuxièmes fentes correspondantes ménagées en périphérie des deuxièmes orifices 33 dans la carte à circuit imprimés 30.

Ces secondes ailettes 25 forment ainsi des moyens de centrage permettant d'assurer un positionnement précis suivant les directions longitudinale et verticale de ce premier guide de lumière 40 et de cette carte à circuits imprimés 30.

De préférence et comme cela est bien visible sur la figure 3, ces secondes ailettes 25 présentent, sur au moins l'une de leurs faces, une nervure 26.

Ces nervures 26, dont les épaisseurs peuvent être ajustées par retrait ou ajout de matière dans le moule d'injection servant à fabriquer la pièce de support 20, constituent ainsi des organes de mise au point du positionnement vertical du premier guide de lumière 40 et de la carte à circuits imprimés 30, de sorte à éviter tout risque de blocage par isostatisme.

Comme illustré par la figure 7, les deux pattes de fixation 54 du deuxième guide de lumière 50 sont emboitées par correspondance de forme sur les extrémités libres des deux fûts 23.

En référence à la figure 8, on peut remarquer que la face orientée vers la carte à circuits imprimées 30 de chaque patte de fixation 54 du deuxième guide de lumière 50 comprend une pluralité de bossages 46 (en l'espèce cinq) constituant des points d'appui ponctuels contre lesquels repose en appui cette carte à circuits imprimées 30 de sorte à positionner précisément ce deuxième guide de lumière 50 à un troisième niveau transversal prédéfini.

Tel que représenté sur les figures 5 et 7, chacun des fûts 23 présente en outre un perçage interne 23A débouchant au niveau de son extrémité libre et dans lequel est vissée une vis auto-taraudeuse 8 ayant préalablement traversé un trou respectif 55 ménagé dans la patte de fixation correspondante 54 du deuxième guide de lumière 50 et dont la tête 8A, logée dans un lamage 56 pratiqué sur la face de cette patte 54 opposée à la carte à circuits imprimés 30 sur le pourtour de ce trou, est plaquée contre le fond de ce lamage 56.

Le vissage des deux vis 8 permet ainsi de solidariser fixement entre eux la pièce de support 20, la carte à circuits imprimés 30 et les deux guides de lumières 40, 50 formant le module lumineux 10.

On notera également que la partie avant de la carte à circuit imprimés 30 (celle saillant longitudinalement en avant des deux guides de lumière 40, 50) porte sur sa première face 30A des troisièmes moyens d'émission de rayons lumineux non visibles sur les figures et propres à assurer, avec le réflecteur 22, la fonction feu de position.

Ces troisièmes moyens d'émission sont constitués par une troisième série de quatre diodes lumineuses électroluminescentes (LEDS ou OLEDS) ou laser présentant des axes d'émission sensiblement perpendiculaires à la carte à circuits imprimés 30 et agencées en regard d'une découpe 27 ménagée dans la paroi principale 21 de la pièce de support 20 (voir figure 3), de sorte à émettre des rayons lumineux à destination du réflecteur 22 en vue de leur transfert vers l'extérieur du module lumineux 10.

Par ailleurs, la pièce de support 20 comprend des moyens de maintien permettant d'empêcher tout débattement transversal de cette partie avant de la carte à circuits imprimés 30.

Tel que représenté sur les figures 3 et 7, ces moyens de maintien comportent une pluralité de murets 28 s'étendant transversalement à la paroi principale 21 en avant des deux guides de lumière 40, 50 et dont les sommets constituent des surfaces de butée contre lesquelles repose en appui la première face 30A de la carte à circuits imprimés 30 de sorte à empêcher toute flexion côté externe de cette dernière.

Comme illustré sur les figures 3, 6 et 7, ces moyens de maintien comprennent également deux pattes élastiquement déformables 29 s'étendant transversalement à la paroi principale 21 en avant des deux guides de lumière 40, 50 et dont les extrémités libres sont pourvues de dents d'encliquetage 29A clipsées dans deux lumières rectangulaires correspondantes 34 ménagées dans la partie avant de la carte à circuits imprimés 30 de sorte à empêcher toute flexion côté interne de cette dernière.

Selon des variantes de réalisation non représentées, le nombre et/ou l'agencement des diodes formants la première, la deuxième et/ou la troisième séries de diodes sont différents.

Selon d'autres variantes de réalisation, la pièce de support comporte un nombre de fûts supérieur, par exemple égal à trois ou quatre. Ces fûts peuvent également présenter une section de forme différente, par exemple carrée.

Selon encore d'autres variantes de réalisation, le nombre et/ou l'agencement des premières et/ou secondes ailettes sont également différents.

D'une manière générale, on rappelle que la présente invention ne se limite pas aux formes de réalisation décrites et représentées, mais englobe toute variante d'exécution couverte par les revendications ci-jointes.

## Revendications

1. Module lumineux pour bloc optique d'éclairage et/ou de signalisation de véhicule automobile, comportant des premiers et deuxièmes (32) moyens d'émission de rayons lumineux agencés sur les deux faces opposées (30A, 30B) d'une même carte à circuit imprimés (30), des premier (40) et deuxième (50) guides de lumière de type plat aptes respectivement à recevoir les rayons lumineux provenant desdits premiers et deuxièmes (32) moyens d'émission et propres à assurer respectivement avec lesdits moyens d'émission correspondants une première et une deuxième fonctions photométrique prédéterminées, ainsi qu'une pièce de support (20) comportant deux fûts (23) traversant successivement deux premiers orifices correspondants (45) ménagés dans ledit premier guide de lumière (40) et deux deuxièmes orifices correspondants (33) ménagés dans ladite carte à circuits imprimés (30), ledit deuxième guide de lumière (50) étant emboîté sur les extrémités libres desdits fûts (23), chaque dit fût (23) présentant en outre un perçage interne (23A) débouchant au niveau de son extrémité libre et dans lequel est vissée une vis (8) ayant préalablement traversé un trou correspondant (55) ménagé dans ledit deuxième guide de lumière (50) et dont la tête (8A) est plaquée contre la face opposée à ladite carte à circuits imprimés (30) de ce deuxième guide de lumière (50) sur le pourtour de ce trou (55) ; **caractérisé en ce que** lesdits fûts (23) présentent une forme conique, leur section diminuant depuis leur base rattachée à ladite pièce de support (20) jusqu'à leur extrémité libre.

2. Module lumineux selon la revendication 1, **caractérisé en ce que** chaque dit fût (23) est pourvu d'au moins une première ailette périphérique (24) saillant radialement depuis sa base et sur une première hauteur prédéterminée, le sommet de chaque au moins dite première ailette (24) constituant une surface de butée contre laquelle repose en appui ledit premier guide de lumière (40) de sorte à le positionner précisément à un premier niveau prédéfini.

3. Module lumineux selon l'une des revendications 1 ou 2, **caractérisé en ce que** la face orientée vers ladite carte à circuits imprimés (30) dudit premier guide de lumière (40) comprend une pluralité de bossages (46) constituant des points d'appui ponctuels contre lesquels repose en appui cette carte à circuits imprimés (30) de sorte à la positionner précisément à un deuxième niveau transversal prédéfini.

4. Module lumineux selon l'une des revendications 1 à 3, **caractérisé en ce que** chaque dit fut (23) est pourvu d'au moins une deuxième ailette périphérique (25), lesdites deuxièmes ailettes traversant (25) successivement des premières fentes correspondantes ménagées en périphérie desdits premiers orifices (45) dans ledit premier guide de lumière (40) et des deuxièmes fentes correspondantes ménagées en périphérie desdits deuxièmes orifices (33) dans ladite carte à circuits imprimés (30).

5. Module lumineux selon la revendication 4, **caractérisé en ce que** chaque dite deuxième ailette (25) présente une nervure (26) sur au moins l'une de ses faces, lesdites nervures (26) constituant des organes de mise au point du positionnement dudit premier guide de lumière (40) et de ladite carte à circuits imprimés (30).

6. Module lumineux selon l'une des revendications 1 à 5, **caractérisé en ce que** ladite pièce de support (20) comporte des moyens de maintien d'une partie de ladite carte à circuits imprimées (30), lesdits moyens de maintien comprenant au moins un muret (28) dont le sommet constitue une surface de butée contre laquelle repose en appui l'une (30A) des faces de ladite carte à circuits imprimés (30), de sorte à empêcher toute flexion dans un sens de cette dernière.

7. Module lumineux selon la revendication 6, **caractérisé en ce que** lesdits moyens de maintien comprennent également au moins une patte élastiquement déformable (29) pourvue d'une dent d'encliquetage (29A) clipsée dans une lumière correspondante (34) ménagée dans ladite carte à circuits imprimés (30), de sorte à empêcher toute flexion dans l'autre sens de cette dernière.

8. Module lumineux selon l'une des revendications 1 à 7, **caractérisé en ce qu'**il comporte des troisièmes moyens d'émission de rayons lumineux agencés sur l'une (30A) des faces de ladite carte à circuit imprimés (30) ainsi qu'un réflecteur (22) ménagé sur ladite pièce de support (20) et apte à recevoir les rayons lumineux provenant desdits troisièmes moyens d'émission, ledit réflecteur (22) et lesdits troisièmes moyens d'émission étant propres à assurer une troisième fonction photométrique prédéterminée.

9. Module lumineux selon l'une des revendications 1 à 8, **caractérisé en ce que** les différents moyens d'émission de rayons lumineux sont constitués respectivement par différentes séries de diodes lumineuses électroluminescentes ou laser (32).

10. Bloc optique d'éclairage et/ou de signalisation de véhicule, **caractérisé en ce qu'**il comporte au moins un module lumineux selon l'une des revendications 1 à 9.

## Patentansprüche

1. Leuchtmodul für eine optische Einheit zur Beleuchtung und/oder Signalisierung eines Kraftfahrzeugs, mit ersten und zweiten (32) Mitteln zum Aussenden von Lichtstrahlen, die auf den beiden gegenüberliegenden Seiten (30A, 30B) einer gleichen Leiterplatte (30) angeordnet sind, ersten (40) und zweiten (50) Lichtleitern vom flachen Typ, die jeweils geeignet sind, die von den ersten und zweiten (32) Aussendemitteln ausgehenden Lichtstrahlen zu empfangen, und die geeignet sind, jeweils mit den entsprechenden Aussendemitteln eine erste und eine zweite vorbestimmte photometrische Funktion zu gewährleisten, sowie ein Trägerteil (20) mit zwei Fässern (23), die nacheinander zwei entsprechende erste Öffnungen (45), die in dem ersten Lichtleiter (40) ausgebildet sind, und zwei entsprechende zweite Öffnungen (33), die in der Leiterplatte (30) ausgebildet sind, durchqueren, wobei der zweite Lichtleiter (50) auf die freien Enden der Fässer (23) aufgesteckt ist, wobei jedes Fass (23) außerdem eine innere Bohrung (23A) aufweist, die an seinem freien Ende mündet und in die eine Schraube (8) eingeschraubt ist, die zuvor durch ein entsprechendes Loch (55) in dem zweiten Lichtleiter (50) hindurchgegangen ist und deren Kopf (8A) an der der Leiterplatte (30) gegenüberliegenden Seite dieses zweiten Lichtleiters (50) auf dem Umfang dieses Lochs (55) anliegt; **dadurch gekennzeichnet, dass** die Fässer (23) eine konische Form aufweisen, wobei ihr Querschnitt von ihrer an dem Trägerteil (20) befestigten Basis bis zu ihrem freien Ende abnimmt.

2. Lichtmodul nach Anspruch 1, **dadurch gekennzeichnet, dass** jeder der genannten Schäfte (23) mit mindestens einer ersten Umfangsrippe (24) versehen ist, die radial von seiner Basis und über eine erste vorbestimmte Höhe vorsteht, wobei die Spitze jeder mindestens einen ersten Rippe (24) eine Anschlagfläche bildet, an der der genannte erste Lichtleiter (40) anliegt, um ihn genau auf einer ersten vorbestimmten Höhe zu positionieren.

3. Lichtmodul nach einem der Ansprüche 1 oder 2, **dadurch gekennzeichnet, dass** die der Leiterplatte (30) zugewandte Seite des ersten Lichtleiters (40) eine Vielzahl von Erhebungen (46) umfasst, die punktuelle Auflagepunkte bilden, gegen die sich die Leiterplatte (30) abstützt, um sie auf einer zweiten vordefinierten Querebene genau zu positionieren.

4. Lichtmodul nach einem der Ansprüche 1 bis 3, **dadurch gekennzeichnet, dass** jeder Fut (23) mit mindestens einer zweiten Umfangsrippe (25) versehen ist, wobei die zweiten Rippen nacheinander entsprechende erste Schlitze, die am Umfang der ersten Öffnungen (45) in dem ersten Lichtleiter (40) vorgesehen sind, und entsprechende zweite Schlitze, die am Umfang der zweiten Öffnungen (33) in der Leiterplatte (30) vorgesehen sind, durchqueren (25).

5. Lichtmodul nach Anspruch 4, **dadurch gekennzeichnet, dass** jede der genannten zweiten Rippen (25) auf mindestens einer ihrer Seiten eine Rippe (26) aufweist, wobei die genannten Rippen (26) Organe zur Feineinstellung der Positionierung des genannten ersten Lichtleiters (40) und der genannten Leiterplatte (30) bilden.

6. Leuchtmodul nach einem der Ansprüche 1 bis 5, **dadurch gekennzeichnet, dass** das Trägerteil (20) Mittel zum Halten eines Teils der Leiterplatte (30) umfasst, wobei die Haltemittel mindestens eine Mauer (28) umfassen, deren Spitze eine Anschlagfläche bildet, an der eine (30A) der Seiten der Leiterplatte (30) anliegt, so dass jede Biegung in eine Richtung dieser letzteren verhindert wird.

7. Leuchtmodul nach Anspruch 6, **dadurch gekennzeichnet, dass** die Haltemittel auch mindestens eine elastisch verformbare Lasche (29) umfassen, die mit einem Rastzahn (29A) versehen ist, der in ein entsprechendes, in der Leiterplatte (30) ausgebildetes Lumen (34) eingeklipst ist, so dass jede Biegung in die andere Richtung der Leiterplatte verhindert wird.

8. Leuchtmodul nach einem der Ansprüche 1 bis 7, **dadurch gekennzeichnet, dass** es dritte Mittel zur Emission von Lichtstrahlen umfasst, die auf einer (30A) der Seiten der Leiterplatte (30) angeordnet sind, sowie einen Reflektor (22), der auf dem Trägerteil (20) angeordnet ist und die von den dritten Emissionsmitteln kommenden Lichtstrahlen empfangen kann, wobei der Reflektor (22) und die dritten Emissionsmittel geeignet sind, eine dritte vorbestimmte photometrische Funktion zu gewährleisten.

9. Leuchtmodul nach einem der Ansprüche 1 bis 8, **dadurch gekennzeichnet, dass** die verschiedenen Mittel zur Emission von Lichtstrahlen jeweils durch verschiedene Reihen von Leuchtdioden oder Laserdioden (32) gebildet werden.

10. Optische Einheit zur Beleuchtung und/oder Signalisierung eines Fahrzeugs, **dadurch gekennzeichnet, dass** sie mindestens ein Leuchtmodul nach einem der Ansprüche 1 bis 9 umfasst.

## Claims

1. Luminous module for a motor vehicle lighting and/or signalling optical unit, comprising first and second light ray emission means (32) arranged on the two opposite faces (30A, 30B) of the same printed circuit board (30), first (40) and second (50) light guides of flat type capable respectively of receiving the light rays coming from the said first and second emission means (32) and capable of ensuring respectively with the said corresponding emission means a first and a second predetermined photometric function, and a support part (20) comprising two shafts (23) passing successively through two corresponding first orifices (45) formed in the said first light guide (40) and two corresponding second orifices (45) formed in the said second light guide (50), the said first and second orifices (45) being arranged in the said support part (20), as well as a support part (20) comprising two shafts (23) passing successively through two corresponding first orifices (45) provided in said first light guide (40) and two corresponding second orifices (33) provided in said printed circuit board (30), said second light guide (50) being fitted onto the free ends of said shafts (23), each of said shafts (23) also having an internal bore (23A) opening at its free end and into which is screwed a screw (8) which has previously passed through a corresponding hole (55) formed in said second light guide (50) and whose head (8A) is pressed against the face of this second light guide (50) opposite said printed circuit board (30) on the periphery of this hole (55); **characterized in that** said shafts (23) have a conical shape, their section decreasing from their base attached to said support part (20) to their free end.

2. Light module according to claim 1, **characterized in that** each said barrel (23) is provided with at least a first peripheral fin (24) projecting radially from its base and over a first predetermined height, the top of each said at least first fin (24) constituting a stop surface against which said first light guide (40) rests so as to position it precisely at a first predefined level.

3. Light module according to one of claims 1 or 2, **characterized in that** the face of said first light guide (40) facing said printed circuit board (30) comprises a plurality of bosses (46) constituting point contact points against which said printed circuit board (30) rests so as to position it precisely at a second predefined transverse level.

4. Light module according to one of claims 1 to 3, **characterized in that** each said barrel (23) is provided with at least one second peripheral fin (25), said second fins passing (25) successively through corresponding first slots made in the periphery of said first orifices (45) in said first light guide (40) and corresponding second slots made in the periphery of said second orifices (33) in said printed circuit board (30).

5. A light module according to claim 4, **characterized in that** each said second fin (25) has a rib (26) on at least one of its faces, said ribs (26) constituting members for adjusting the positioning of said first light guide (40) and said printed circuit board (30).

6. Light module according to one of claims 1 to 5, **characterized in that** said support part (20) comprises means for holding a part of said printed circuit board (30), said holding means comprising at least one low wall (28), the top of which constitutes an abutment surface against which one (30A) of the faces of said printed circuit board (30) rests, so as to prevent any bending in one direction of the latter.

7. Light module according to claim 6, **characterized in that** said holding means also comprise at least one elastically deformable tab (29) provided with a snap-in tooth (29A) clipped into a corresponding slot (34) formed in said printed circuit board (30), so as to prevent any bending in the other direction of the latter.

8. Luminous module according to one of claims 1 to 7, **characterized in that** it comprises third means for emitting light rays arranged on one (30A) of the faces of the said printed circuit board (30) as well as a reflector (22) provided on the said support part (20) and capable of receiving the light rays originating from the said third emission means, the said reflector (22) and the said third emission means being capable of ensuring a third predetermined photometric function.

9. Light module according to one of claims 1 to 8, **characterized in that** the different light ray emitting means are constituted respectively by different series of light emitting diodes or lasers (32).

10. Vehicle lighting and/or signalling optical unit, **characterized in that** it comprises at least one light module according to one of claims 1 to 9.
